# EUROPEAN PATENT APPLICATION

(11) **EP 4 752 821 A1**
(43) Date of publication of application: **03.06.2026**
(21) Application number: 24859845.0
(22) Date of filing: 28.08.2024
(51) Int. Cl.: G06T 1/00

(54) **INFORMATION PROVIDING SYSTEM AND INFORMATION PROVIDING METHOD**

(30) Priority: 30.08.2023 WO PCT/JP2023/031560
(71) Applicant: Resonac Corporation, Tokyo 105-7325 (JP)
(72) Inventor: SAKAGUCHI, Suguru, Tokyo 105-7325 (JP); TOMITA, Miyuki, Tokyo 105-7325 (JP)
(74) Representative: Strehl & Partner mbB
(86) International application number: PCT/JP2024/030764
(87) International publication number: WO 2025/047815

(57) **Abstract**

An information providing system includes: an acquisition unit that acquires color vision information indicating color vision of a person associated with information provision; a color determination unit that determines a color related to an article for which information is provided, based on the color vision information acquired by the acquisition unit; and an information providing unit that provides information on an article related to the color determined by the color determination unit.

## Description

### Technical Field

The present disclosure relates to an information providing system and an information providing method for providing information on articles.

### Background Art

Color processing in consideration of persons with color vision deficiency has been known in the related art. For example, a color processing device described in Patent Literature 1 acquires a color value to be subjected to color processing, calculates a color vision degree coefficient representing a degree of color vision deficiency based on a distribution of the number of persons in examination results obtained by a color vision examination conducted on a predetermined group, calculates a color conversion coefficient used for converting the acquired color value based on a correspondence between the color vision degree coefficient and sensitivity characteristics of L cones, M cones, and S cones, and performs color conversion processing on the color value using the color conversion coefficient.

### Citation List

### Patent Literature

[Patent Literature 1] Japanese Patent No. 5924289

### Summary of Invention

### Technical Problem

It is conceivable to provide a person who intends to purchase a product such as clothing with information on a product having a color in consideration of the color vision that the person has. For example, it is conceivable to provide a person with color vision deficiency with information on a product that appears to be the same color to both the person with color vision deficiency and a person with normal color vision. With such information provided, a person with color vision deficiency can purchase an appropriate product in consideration of his or her own color vision. In addition, it is conceivable to provide the above information for articles other than products. The color processing device disclosed in the above Patent Literature 1 does not necessarily have sufficient functions from such a viewpoint.

The present disclosure has been made in view of the above, and an object thereof is to provide an information providing system and an information providing method capable of appropriately providing information on articles in consideration of the color vision of a person associated with information provision.

### Solution to Problem

In order to achieve the above object, an information providing system according to the present disclosure includes: an acquisition unit that acquires color vision information indicating color vision of a person associated with information provision; a color determination unit that determines a color related to an article for which information is provided, based on the color vision information acquired by the acquisition unit; and an information providing unit that provides information on an article related to the color determined by the color determination unit.

In the information providing system according to the present disclosure, a color related to an article for which information is provided is determined based on color vision information indicating color vision of a person associated with information provision, and information on an article related to the determined color is provided. Therefore, according to the information providing system according to the present disclosure, it is possible to appropriately provide information on articles in consideration of the color vision of a person associated with information provision.

The acquisition unit may acquire, as the color vision information, information indicating sensitivity characteristics for each wavelength of cones that the person associated with information provision has. According to this configuration, it is possible to appropriately and reliably determine a color related to an article for which information is provided. As a result, it is possible to provide information on articles while appropriately and reliably considering the color vision of a person associated with information provision.

The color determination unit may determine, as a color related to an article for which information is provided, a color related to an article for which information is provided, based on color vision different from the color vision indicated by the color vision information. According to this configuration, it is possible to provide information on articles while also considering color vision different from the color vision indicated by the color vision information. For example, when a person associated with information provision is a person with color vision deficiency, it is possible to provide information on articles in consideration of the color vision of a person with normal color vision.

The acquisition unit may also acquire reference color information indicating a reference color that serves as a reference for information provision, and the color determination unit may determine a color related to an article for which information is provided, also based on the reference color information acquired by the acquisition unit. According to this configuration, it is possible to provide information on articles with a specific color as a reference.

In addition, the present disclosure can be described not only as an information providing system as described above but also as an information providing method as described below. These are substantially the same, differing only in category, and achieve the same operations and effects.

That is, an information providing method according to the present disclosure is an information providing method that is an operation method of an information providing system, and includes: an acquisition step of acquiring color vision information indicating color vision of a person associated with information provision; a color determination step of determining a color related to an article for which information is provided, based on the color vision information acquired in the acquisition step; and an information providing step of providing information on an article related to the color determined in the color determination step.

### Advantageous Effects of Invention

According to the present disclosure, it is possible to appropriately provide information on articles in consideration of the color vision of a person associated with information provision.

### Brief Description of Drawings

[FIG. 1] FIG. 1 is a diagram showing a functional configuration of an information providing system according to an embodiment of the present disclosure.
[FIG. 2] FIG. 2 is a graph showing an example of sensitivity characteristics of L cones, M cones, and S cones.
[FIG. 3] FIG. 3 is a flowchart showing an information providing method that is processing executed by the information providing system according to the embodiment of the present disclosure.

### Description of Embodiments

Hereinafter, an embodiment of an information providing system and an information providing method according to the present disclosure will be described in detail with reference to the drawings. In the description of the drawings, the same elements are denoted by the same reference numerals, and a redundant description thereof will be omitted.

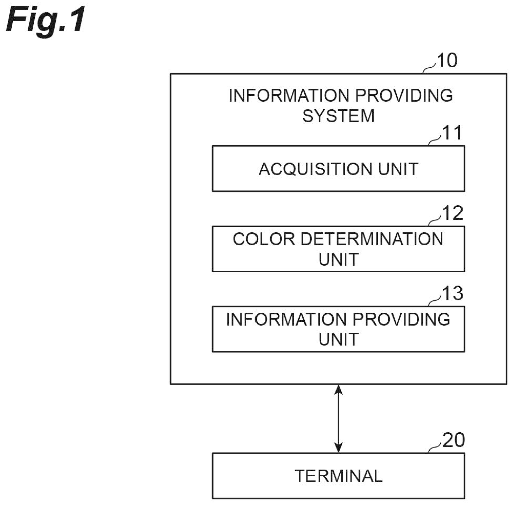

FIG. 1 shows a functional configuration of an information providing system 10 according to the present embodiment. The information providing system 10 is a system (apparatus) that provides information on articles. In the present embodiment, articles related to information provision are products. For example, the information providing system 10 provides product information to a user who is a person associated with information provision and who intends to purchase a product. Specifically, the information providing system 10 transmits product information to a terminal 20 used by the user to provide product information to the user.

The product is, for example, clothing. Clothing refers to all items worn on the body and includes clothes, underwear, hats, scarves, gloves, footwear, and the like. In addition, the product may be any item as long as color is relevant. The provision of product information may be, for example, providing information on products recommended to the user, or may be providing information on products that the user can purchase. The information providing system 10 may have a function of selling products. The function of selling products may be, for example, the same as a function of conventional electronic commerce using a website or the like. In this case, the provision of information by the information providing system 10 may be performed by a seller of products.

The information providing system 10 may provide product information in a manner other than the above. In addition, the information providing system 10 may provide information to persons other than the user (person associated with information provision). In addition, the information providing system 10 may provide information on articles other than products.

Information provision by the information providing system 10 is performed according to the color vision of the user and the color of the product. Information provision by the information providing system 10 is in consideration of color vision diversity. Color vision diversity refers to a situation in which recognition or discrimination of colors differs among people.

As one classification of types of color vision, there are five types of color vision: C-type (Common), P-type (Protanope), D-type (Deuteranope), T-type (Tritanope), and A-type (Achromatic).

The C-type is a group having three types of cones: L cones, M cones, and S cones. L cones are photoreceptor cells that respond with high sensitivity to light near long wavelengths such as red. M cones are photoreceptor cells that respond with high sensitivity to light near medium wavelengths such as green. S cones are photoreceptor cells that respond with high sensitivity to light near short wavelengths such as blue. In the case of Japanese people, 95% of males and 99% of females belong to the C-type. People of the C-type are also referred to as persons with normal color vision.

On the other hand, people of the P-type, D-type, T-type, and A-type are also referred to as persons with color vision deficiency. The P-type is a group consisting of protanopia (P-type strong) in which L cones are absent and protanomaly (P-type weak) in which the sensitivity of L cones is shifted to resemble the sensitivity of M cones. The D-type is a group consisting of deuteranopia (D-type strong) in which M cones are absent and deuteranomaly (D-type weak) in which the sensitivity of M cones is shifted to resemble the sensitivity of L cones. The T-type is a group in which S cones are absent. The A-type is a group having only one type of cone or having no cones at all. Among persons with color vision deficiency, the P-type and D-type account for the majority, and the proportions of the T-type and A-type are extremely small.

For example, when the user is a person with color vision deficiency (person with minority color vision), the information providing system 10 provides information on a product (for example, clothing) of a color for which there is no difference, or a small difference, between a color that the user can recognize (discriminate) and a color that a person with normal color vision (person with majority color vision, person without color vision deficiency) can recognize. This allows the user who is a person with color vision deficiency to use a product of a color for which there is no difference in color recognition from a person with normal color vision.

Alternatively, the information providing system 10 may provide, as information on the product, information on a color (a color different from the color of the product that a person with normal color vision can recognize) that the user who is a person with color vision deficiency can recognize as the color of the product that a person with normal color vision can recognize. This allows the user who is a person with color vision deficiency to recognize the color of the product that a person with normal color vision can recognize when purchasing the product. In addition, the information providing system 10 may provide product information other than the above. In addition, the user does not need to be a person with color vision deficiency and may be a person with normal color vision.

Through information provision by the information providing system 10, it is possible to facilitate a common recognition of colors among people having different color visions or to promote mutual understanding regarding recognition or discrimination of colors.

Specifically, the information providing system 10 is a PC (personal computer) or a server device or the like that is a computer including hardware such as a CPU (Central Processing Unit) and memory. Each function of the information providing system 10 described below is achieved by these components operating according to a program or the like. The information providing system 10 may be implemented by a single computer, or may be implemented by a computer system composed of a plurality of computers connected to each other via a network.

In the present embodiment, the information providing system 10 transmits and receives information to and from the terminal 20 via a communication network such as the Internet. The information providing system 10 has a communication function for transmitting and receiving information to and from other devices. However, depending on the manner in which the information providing system 10 is implemented, the information providing system 10 may not have a communication function.

The terminal 20 is a terminal used by the user. The terminal 20 is a device having a communication function, which is for transmitting and receiving information to and from the information providing system 10, and the like. Specifically, the terminal 20 is a terminal such as a PC or a smartphone.

Subsequently, functions of the information providing system 10 according to the present embodiment will be described. As shown in FIG. 1, the information providing system 10 is configured to include an acquisition unit 11, a color determination unit 12, and an information providing unit 13.

The acquisition unit 11 is a functional unit that acquires color vision information indicating color vision of a person associated with information provision. The acquisition unit 11 may acquire, as the color vision information, information indicating sensitivity characteristics for each wavelength of cones that the person associated with information provision has. The acquisition unit 11 may also acquire reference color information indicating a reference color that serves as a reference for information provision.

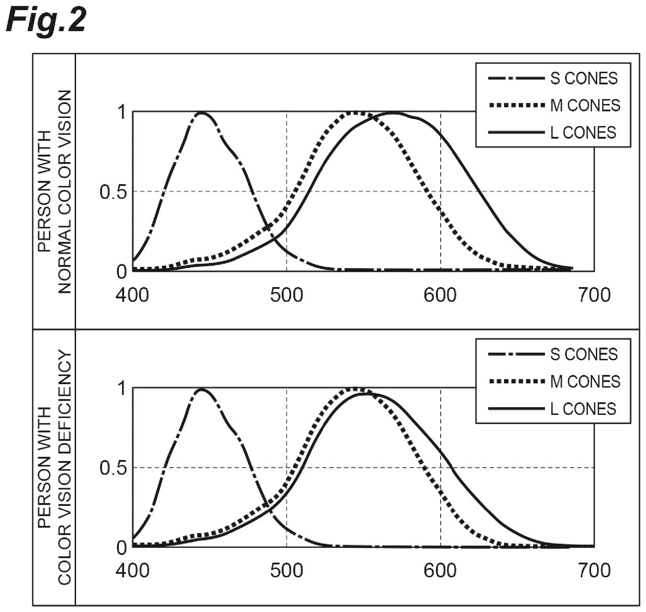

The color vision information is information indicating the color vision of the user. The color vision information is, for example, information indicating sensitivity characteristics for each wavelength of cones (L cones, M cones, and S cones) that the user has. The sensitivity characteristics are also referred to as spectral characteristics. FIG. 2 is a graph showing an example of sensitivity characteristics of each cone for a person with normal color vision and a person with color vision deficiency. The horizontal axis and the vertical axis of the graph indicate wavelength (nm) and relative sensitivity, respectively. The person with color vision deficiency shown in FIG. 2 corresponds to protanomaly. The person with color vision deficiency has a greater degree of overlap between the sensitivity characteristics of M cones and L cones compared to a person with normal color vision (C-type). Such a difference in sensitivity characteristics causes a difference in recognition or discrimination of colors.

For example, by an operation of the user or the like, the terminal 20 transmits information indicating the above sensitivity characteristics of the user corresponding to the graph of FIG. 2 to the information providing system 10. Transmission of information from the terminal 20 may be performed via a website for selling products or the like (the same applies hereinafter). In addition, transmission of information from the terminal 20 may be performed by a method other than the above.

In a case where information indicating the sensitivity characteristics is transmitted from the terminal 20, the acquisition unit 11 receives and acquires the information indicating the sensitivity characteristics transmitted from the terminal 20. Alternatively, the acquisition unit 11 may store in advance a correspondence between types of color vision and the above sensitivity characteristics, and acquire information indicating the above sensitivity characteristics of the user based on the correspondence. In this case, by an operation of the user or the like, the terminal 20 transmits information indicating the type of color vision of the user. The acquisition unit 11 receives the information indicating the type of color vision transmitted from the terminal 20. The acquisition unit 11 acquires the information indicating the above sensitivity characteristics stored in association with the type of color vision indicated in the received information as information indicating the above sensitivity characteristics of the user.

The acquisition unit 11 may acquire the color vision information by a method other than the above. In addition, the color vision information may be information other than the information indicating the above sensitivity characteristics as long as it indicates the color vision of the user and can be used for processing described below. The acquisition unit 11 outputs the acquired color vision information to the color determination unit 12.

In an aspect using a reference color that serves as a reference for information provision described below, the acquisition unit 11 also acquires reference color information indicating the reference color. The reference color is, for example, designated by the user. The reference color is used, for example, in a case of providing, as information on the product, information on a color (a color different from the color of the product that a person with normal color vision can recognize) that the user who is a person with color vision deficiency can recognize as the color of the product that a person with normal color vision can recognize, as described above. In this case, the reference color is the color of the product that a person with normal color vision can recognize. As information indicating a color (reference color), any conventional information capable of expressing a color (for example, information expressed in RGB) may be used.

For example, the acquisition unit 11 receives and acquires reference color information transmitted from the terminal 20 by an operation of the user or the like. In addition, the acquisition unit 11 may acquire the reference color information by a method other than the above. The acquisition unit 11 outputs the acquired reference color information to the color determination unit 12.

The color determination unit 12 is a functional unit that determines a color related to an article for which information is provided, based on the color vision information acquired by the acquisition unit 11. The color determination unit 12 may determine, as a color related to an article for which information is provided, a color related to an article for which information is provided, based on color vision different from the color vision indicated by the color vision information. The color determination unit 12 may determine a color related to an article for which information is provided, also based on the reference color information acquired by the acquisition unit 11. For example, the color determination unit 12 performs determination as follows.

The color determination unit 12 receives the color vision information from the acquisition unit 11. The color determination unit 12, for example, stores in advance a correspondence between color vision information that can be acquired by the acquisition unit 11 and a color to be determined for the color vision information. The color stored in association with the color vision information is in accordance with a predetermined criterion. For example, the color is a color that a person with color vision deficiency having the color vision indicated by the color vision information and a person with normal color vision can recognize with no difference or a small difference. The color is a color having a spectrum configured such that a response of the color vision (cones that the user has) of a person with color vision deficiency who has visually recognized the color matches, or has a difference equal to or less than a certain level from, a response of the color vision of a person with normal color vision who has visually recognized the color. The spectrum is a plot of a relationship between wavelength (nm) and reflectance (%). The color may be prepared in advance by prior experiments or calculation by a computer or the like.

The color determination unit 12 determines the color stored in association with the color vision information received from the acquisition unit 11 as a color related to a product for which information is provided. The color determination unit 12 may determine the product itself of the color as the determination of a color related to a product to be provided. In this case, the color determination unit 12 may store in advance a correspondence between the color vision information and the product of the above color.

When the reference color information is used for determination of a color related to a product for which information is provided, the color determination unit 12 receives the reference color information in addition to the color vision information from the acquisition unit 11. In this case, the color determination unit 12, for example, stores in advance a correspondence between a combination of color vision information and reference color information that can be acquired by the acquisition unit 11 and a color to be determined for the color vision information. The color stored in association with the combination of the color vision information and the reference color information is in accordance with a predetermined criterion. For example, the color is a color (a color different from the color of the product that a person with normal color vision can recognize) that a person with color vision deficiency can recognize as the color of the product (reference color) that a person with normal color vision can recognize. The color is a color having a spectrum configured such that a response of the color vision (cones that the user has) of a person with color vision deficiency who has visually recognized the color matches, or has a difference equal to or less than a certain level from, a response of the color vision of a person with normal color vision who has visually recognized the reference color. The color may be prepared in advance by prior experiments or calculation by a computer or the like, as in the above case.

As described above, the color corresponding to the color vision information may be one in which color vision different from the color vision indicated by the color vision information is reflected. For example, when the color vision indicated by the color vision information is the color vision of a person with color vision deficiency, the color vision of a person with normal color vision, which is different from the color vision, may be reflected in the color corresponding to the color vision information. However, the color corresponding to the color vision information does not necessarily need to be one in which color vision different from the color vision indicated by the color vision information is reflected.

The color determination unit 12 may determine a color related to a product for which information is provided by a method other than using the above correspondence information stored in advance. For example, the color determination unit 12 may calculate a color in accordance with the above predetermined criterion based on the color vision information. When the reference color information is used for determination of a color related to a product for which information is provided, the reference color information may be used for the above calculation. In addition, color vision different from the color vision indicated by the color vision information may be used for the above calculation. For example, when the color vision indicated by the color vision information is the color vision of a person with color vision deficiency, the color vision of a person with normal color vision, which is different from the color vision, may be used for the above calculation. Any method can be used for the above calculation.

The color determination unit 12 outputs information indicating the determined color to the information providing unit 13. In addition, in a case where the reference color information is used for color determination and is also used by the information providing unit 13 as described below, the color determination unit 12 outputs the reference color information to the information providing unit 13.

The information providing unit 13 is a functional unit that provides information on an article related to the color determined by the color determination unit 12. For example, the information providing unit 13 performs information provision as follows.

The information providing unit 13 receives information indicating a color from the color determination unit 12. For example, when the color determined by the color determination unit 12 is a color of a product, the information providing unit 13 provides information on a product of the color indicated by the received information. Specifically, the information providing unit 13 stores a correspondence between a color and a product of the color, and determines a product of the color indicated by the received information based on the correspondence. The color determined by the color determination unit 12 and the color of the product for which information is provided do not need to match and may be similar to each other. When a product of a specific color is determined by the color determination unit 12, the information providing unit 13 provides information on the product.

Specifically, the information providing unit 13 performs information provision by transmitting the information to the terminal 20. Transmission of information to the terminal 20 may be performed, for example, via a website for selling products or the like (the same applies hereinafter). In addition, transmission of information to the terminal 20 may be performed by a method other than the above.

The information transmitted to the terminal 20 may be information recommending a product. The product information transmitted to the terminal 20 may be, for example, any information related to the product such as the name, image, and price of the product. The information providing unit 13 stores in advance information on products to be provided.

The product related to the information transmitted to the terminal 20 may be one that is not currently in stock as a product for sale. In that case, for example, when the user purchases the product in response to the transmission of information to the terminal 20, the product may be manufactured. In this way, the product related to the information transmitted to the terminal 20 may be provided as a custom-made product. According to information provision as described above, for example, it is possible to purchase a product of a color for which there is no difference, or a small difference, between a color that a person with color vision deficiency can recognize and a color that a person with normal color vision can recognize, as described above.

In addition, the information providing unit 13 may receive the reference color information from the color determination unit 12 and perform information provision also using the reference color information. For example, for a product of the color (a color that a person with normal color vision can recognize) indicated by the reference color information, the information providing unit 13 may use, as information on the product to be provided, information indicating that the color determined by the color determination unit 12 is a color of the product that a person with color vision deficiency can recognize. According to information provision as described above, for example, the user who is a person with color vision deficiency can recognize the color of the product that a person with normal color vision can recognize when purchasing the product.

The information provided by the information providing unit 13 may be information on a product related to the color determined by the color determination unit 12, and does not necessarily need to be the above information. In addition, the information providing unit 13 may provide information by a method other than the above.

In addition, the destination of information provision by the information providing unit 13 may be other than the user (the terminal 20 of the user). For example, the destination of information provision by the information providing unit 13 may be a manufacturer of the product or the like. The above describes the functions of the information providing system 10 according to the present embodiment.

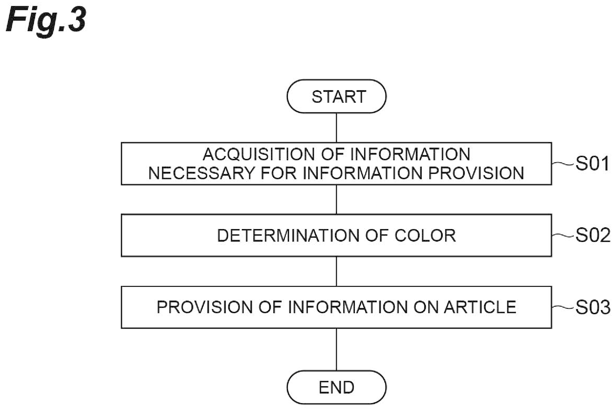

Subsequently, an information providing method that is processing executed by the information providing system 10 according to the present embodiment (an operation method performed by the information providing system 10) will be described using the flowchart of FIG. 3. In this processing, first, information necessary for information provision is acquired by the acquisition unit 11 (S01, acquisition step). The information acquired by the acquisition unit 11 includes color vision information indicating the color vision of the user who is a person associated with information provision. The information acquired by the acquisition unit 11 may also include reference color information indicating a reference color that serves as a reference for information provision.

Subsequently, a color related to an article for which information is provided is determined by the color determination unit 12 based on the information acquired by the acquisition unit 11 (S02, color determination step). Subsequently, information on an article related to the color determined by the color determination unit 12 is provided by the information providing unit 13 (S03, information providing step). The above is the information providing method according to the present embodiment.

In the present embodiment, a color related to an article for which information is provided is determined based on color vision information indicating color vision of a person associated with information provision, and information on an article related to the determined color is provided. Therefore, according to the present embodiment, it is possible to appropriately provide information on articles such as products in consideration of the color vision of a person associated with information provision.

This allows, for example, the user who is a person with color vision deficiency to use a product of a color for which there is no difference in color recognition from a person with normal color vision, as described above. In addition, the user who is a person with color vision deficiency can recognize the color of the product that a person with normal color vision can recognize when purchasing the product. In this way, according to the present embodiment, it is possible to facilitate a common recognition of colors among people having different color visions or to promote mutual understanding regarding recognition or discrimination of colors. In addition, according to the present embodiment, it is possible to perform information provision in consideration of color vision diversity.

In addition, as in the present embodiment, information indicating sensitivity characteristics for each wavelength of cones that a person associated with information provision has may be used as the color vision information. According to this configuration, it is possible to appropriately and reliably determine a color related to an article for which information is provided. As a result, it is possible to provide information on articles while appropriately and reliably considering the color vision of a person associated with information provision.

In addition, as in the present embodiment, a color related to an article for which information is provided may be determined based on color vision different from the color vision indicated by the color vision information, as a color related to an article for which information is provided. According to this configuration, it is possible to provide information on articles while also considering color vision different from the color vision indicated by the color vision information. For example, when a person associated with information provision is a person with color vision deficiency, it is possible to provide information on articles in consideration of the color vision of a person with normal color vision.

In addition, as in the present embodiment, a color related to an article for which information is provided may be determined also based on the reference color information. According to this configuration, it is possible to provide information on articles with a specific color as a reference.

Articles according to the present embodiment are classified into various categories. The categories include, for example, food, clothing, and housing, clothing/fashion, school/children, brand/advertising, toys, and others. Examples of specific articles included in these categories are as follows. Articles related to food, clothing, and housing are, for example, clothes, foods containing colorants, tableware, tablecloths, wallpaper, furniture, bedding, and the like. Articles related to food, clothing, and housing may be a combination of wallpaper, furniture, bedding, and the like with lighting. Articles related to clothing/fashion are, for example, umbrellas, hats, hairpins, hair ties, headbands, hair bands, glasses, sunglasses, clip-on earrings, pierced earrings, earphones, cosmetics, articles related to nail art (nail polish, gel, stickers, and the like), necklaces, neckties, scarves, winter scarves, shawls, tie pins, innerwear tops, outerwear tops, innerwear bottoms, outerwear bottoms, gloves, wristbands, bracelets, watches, smartwatches, rings, smartphone cases, bags, belts, socks, leggings, tights, stockings, anklets, shoes, sandals, geta, slippers, fans, folding fans, handkerchiefs, towels, and the like. Articles related to school/children are, for example, stationery, notebooks, letter sets, toolboxes, school bags, textbooks/teaching materials, uniforms, gym clothes, indoor shoes, paint sets, lunch boxes, crayons, sticky notes, files, binders, and the like. Articles related to brand/advertising are, for example, articles with logos, signboards, articles related to advertising, packages (beverages, confectionery, book covers, CD jackets), and the like. Articles related to toys are, for example, stuffed animals/dolls, playhouse items, clay, and the like. Other articles are, for example, candles, soaps, business cards, and the like. As described above, articles according to the present embodiment are diverse, and specific articles are included in each category. This makes it possible to accommodate various uses or scenes.

The information providing system and the information providing method according to the present disclosure have the following configurations.
[1] An information providing system comprising:
   an acquisition unit that acquires color vision information indicating color vision of a person associated with information provision;
   a color determination unit that determines a color related to an article for which information is provided, based on the color vision information acquired by the acquisition unit; and
   an information providing unit that provides information on an article related to the color determined by the color determination unit.
[2] The information providing system according to [1], wherein the acquisition unit acquires, as the color vision information, information indicating sensitivity characteristics for each wavelength of cones that the person associated with information provision has.
[3] The information providing system according to [1] or [2], wherein the color determination unit determines, as the color related to the article for which information is provided, the color related to the article for which information is provided, based on color vision different from the color vision indicated by the color vision information.
[4] The information providing system according to any one of [1] to [3], wherein the acquisition unit also acquires reference color information indicating a reference color that serves as a reference for information provision, and
   wherein the color determination unit determines the color related to the article for which information is provided, also based on the reference color information acquired by the acquisition unit.
[5] An information providing method that is an operation method of an information providing system, the information providing method comprising:
   an acquisition step of acquiring color vision information indicating color vision of a person associated with information provision;
   a color determination step of determining a color related to an article for which information is provided, based on the color vision information acquired in the acquisition step; and
   an information providing step of providing information on an article related to the color determined in the color determination step.

### Reference Signs List

10: information providing system; 11: acquisition unit; 12: color determination unit; 13: information providing unit; 20: terminal.

## Claims

1. An information providing system comprising:
an acquisition unit that acquires color vision information indicating color vision of a person associated with information provision;
a color determination unit that determines a color related to an article for which information is provided, based on the color vision information acquired by the acquisition unit; and
an information providing unit that provides information on an article related to the color determined by the color determination unit.

2. The information providing system according to claim 1, wherein the acquisition unit acquires, as the color vision information, information indicating sensitivity characteristics for each wavelength of cones that the person associated with information provision has.

3. The information providing system according to claim 1 or 2, wherein the color determination unit determines, as the color related to the article for which information is provided, the color related to the article for which information is provided, based on color vision different from the color vision indicated by the color vision information.

4. The information providing system according to claim 1 or 2, wherein the acquisition unit also acquires reference color information indicating a reference color that serves as a reference for information provision, and
wherein the color determination unit determines the color related to the article for which information is provided, also based on the reference color information acquired by the acquisition unit.

5. An information providing method that is an operation method of an information providing system, the information providing method comprising:
an acquisition step of acquiring color vision information indicating color vision of a person associated with information provision;
a color determination step of determining a color related to an article for which information is provided, based on the color vision information acquired in the acquisition step; and
an information providing step of providing information on an article related to the color determined in the color determination step.
